# EUROPEAN PATENT APPLICATION

(11) **EP 1 783 387 A1**
(43) Date of publication of application: **09.05.2007**
(21) Application number: 05774682.8
(22) Date of filing: 25.08.2005
(51) Int. Cl.: F16D 3/41

(54) **UNIVERSAL JOINT**

(30) Priority: 25.08.2004 JP 2004244883
(71) Applicant: JTEKT Corporation, Osaka-shi Osaka 542-8502 (JP)
(72) Inventor: OZAKI, Mitsuharu c/o JTEKT Corporation, Osaka-shi, Osaka 5428502 (JP)
(74) Representative: Steil, Christian
(86) International application number: PCT/JP2005/015474
(87) International publication number: WO 2006/022351

(57) **Abstract**

A universal joint (4; 6) comprises an outer ring (28) held in a fitting hole (25) of a yoke (20; 21) and supporting a trunnion (24) so as to be rotatable with a needle roller (27) sandwiched therebetween. The outer ring (28) comprises a main body (281) fitted in the fitting hole (25) and a closed end (282) provided at one end in the main body (281). The trunnion (24) comprises an end surface (24a) having a ball holding hole (29; 29A) formed thereon. A ball receiving section (31; 31A) for elastically receiving a ball (30) held in the ball holding hole (29; 29A) is provided at the closed end (282) of the outer ring (28). The ball receiving section (31; 31A) comprises either one of a conical tapered surface (31) and a concavely-curved surface (31A). The radius of curvature (Rb) of the concavely-curved surface (31A) is larger than the radius (Ra) of the ball (30).

## Description

### Technical Field

The present invention relates to a universal joint using a cross spider.

### Background Art

In this type of universal joint, each of trunnions in a cross spider is supported by an outer ring fitted in a corresponding fitting hole of a yoke with a needle roller sandwiched therebetween (see JP2004-11670, A laid open to public inspection on January 15, 2004, for example).

The outer ring has a closed end. In order to restrain the rise in rotation torque, a clearance is generally provided between the trunnion and the closed end of the outer ring. A clearance in the radial direction between an outer peripheral surface of the trunnion and an inner peripheral surface of the outer ring is made larger than the diameter of the needle roller. Therefore, the trunnion may produce backlash and noise in the axial direction and the radial direction.

Conversely, when an interference occurs in the axial direction and the radial direction between the trunnion and the outer ring due to the effect of variations in tolerance among components, resistance torque is increased when the trunnion and the outer ring are relatively rotated.

An object of the present invention is to provide a universal joint capable of reducing noise and having low resistance torque.

### Disclosure of Invention

In order to attain the above-mentioned object, the present invention provides a universal joint comprising a cross spider in a preferred mode. The universal joint comprises a trunnion provided in the cross spider, a plurality of needle rollers arranged in an annular shape so as to surround an outer peripheral surface of the trunnion, and an outer ring held in a fitting hole of a yoke and supporting the trunnion so as to be rotatable with the needle rollers sandwiched therebetween.

The outer ring comprises a cylindrical main body fitted in the fitting hole of the yoke and a closed end for closing one end of the main body. The trunnion comprises an end surface having a ball holding hole formed thereon. A ball is held in the ball holding hole. A ball receiving section for elastically receiving the ball held in the ball holding hole is provided at the closed end of the outer ring. The ball receiving section comprises either one of a conical tapered surface and a concavely-curved surface. The radius of curvature of the concavely-curved surface is larger than the radius of the ball.

In this mode, when transmission torque is relatively lower than a predetermined amount, the torque is transmitted to the outer ring from the trunnion through the ball. When the transmission torque is higher than the predetermined amount, the torque is transmitted to the outer ring from the trunnion through the needle rollers. The ball held in the ball holding hole of the trunnion is elastically urged in the axial direction and the radial direction of the trunnion by the ball receiving section composed of a conical tapered surface, for example. Consequently, backlash in the axial direction and the radial direction by the trunnion can be eliminated. As a result, noise can be reduced.

Even when the difference between the outer diameter of the trunnion and the inner diameter of the outer ring is larger than two times the diameter of the needle roller, the trunnion does not produce backlash in the radial direction.

Furthermore, the ball receiving section is brought into linear contact with the ball, so that the rise in resistance torque can be restrained.

### Brief Description of Drawings

Fig. 1 is a schematic view of a steering device to which a universal joint according to an embodiment of the present invention is applied.
Fig. 2 is a schematic side view of a steering shaft, an intermediate shaft, and a pinion shaft, and a universal joint for connecting them.
Fig. 3 is a partially broken side view of the universal joint.

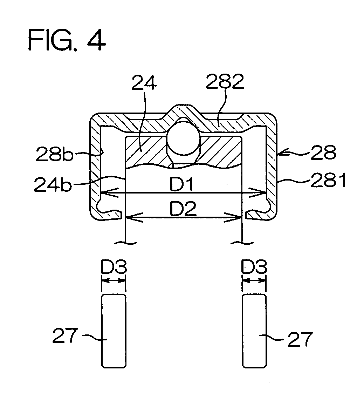

Fig. 4 is a schematic exploded sectional view of a principal part of the universal joint.
Fig. 5 is a cross-sectional view of a principal part of a universal j oint according to another embodiment of the present invention.
Fig. 6 is a cross-sectional view of a principal part of a universal joint according to still another embodiment of the present invention, where a helical compression spring is used as an urging member.
Figs. 7A, 7B, and 7C are cross-sectional views each showing a principal part of a universal joint according to a further embodiment of the present invention, where a belleville spring is used as an urging member.
Fig. 8 is a cross-sectional view of a principal part of a universal joint according to a still further embodiment of the present invention.

### Best Mode for Carrying out the Invention

Embodiments of the present invention will be described while referring to the accompanying drawings.

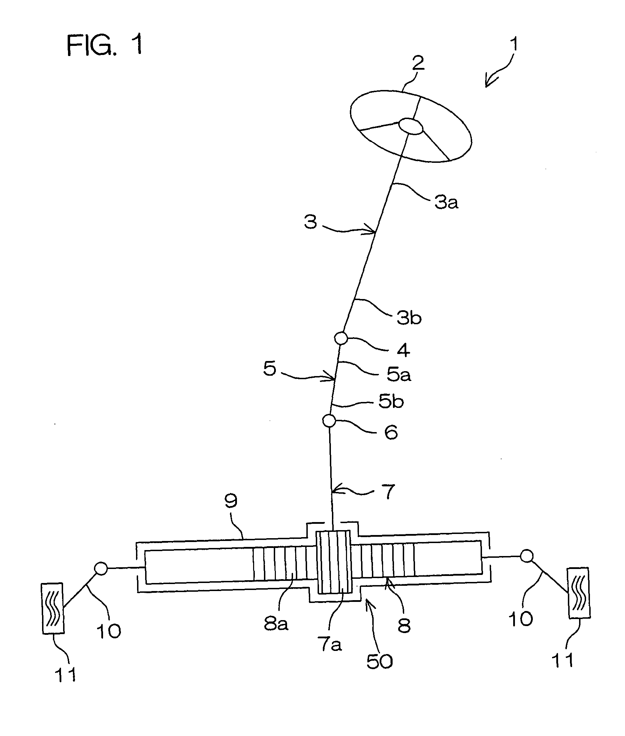

Fig. 1 is a schematic view of a steering device 1 of an automobile to which universal joints 4 and 6 according to an embodiment of the present invention are applied. Referring to Fig. 1, the steering device 1 comprises a steering shaft 3 having its one end 3a connected to a steering member 2 such as a steering wheel, and an intermediate shaft 5 having its one end 5a connected to the other end 3b of the steering shaft 3 with the universal joint 4 according to the present embodiment sandwiched therebetween.

The steering device 1 comprises a pinion shaft 7 connected to the other end 5b of the intermediate shaft 5 with the universal joint 6 according to the present embodiment sandwiched therebetween, and a rack bar 8 serving as a steering rack shaft having rack teeth 8a engaged with a pinion 7a provided in the vicinity of an end of the pinion shaft 7 and extending in a right-and-left direction of a vehicle.

The pinion shaft 7 and the rack bar 8 constitute a rack-and-pinion mechanism A serving as a steering mechanism. The rack bar 8 is supported so as to be movable linearly back and forth through a plurality of bearings (not shown) within a housing 9 fixed to a vehicle body. Both ends of the rack bar 8 project toward both sides of the housing 9. A tie rod 10 is coupled to each of the ends of the rack bar 8. Each of the tie rods 10 is connected to a corresponding steerable wheel 1 through a corresponding knuckle arm (not shown).

When the steering member 2 is operated so that the steering shaft 3 is rotated, the rotation is converted into linear motion of the rack bar 8 in a right-and-left direction of the automobile by the pinion 7a and the rack teeth 8a. Consequently, the steering of the steerable wheels 11 is achieved.

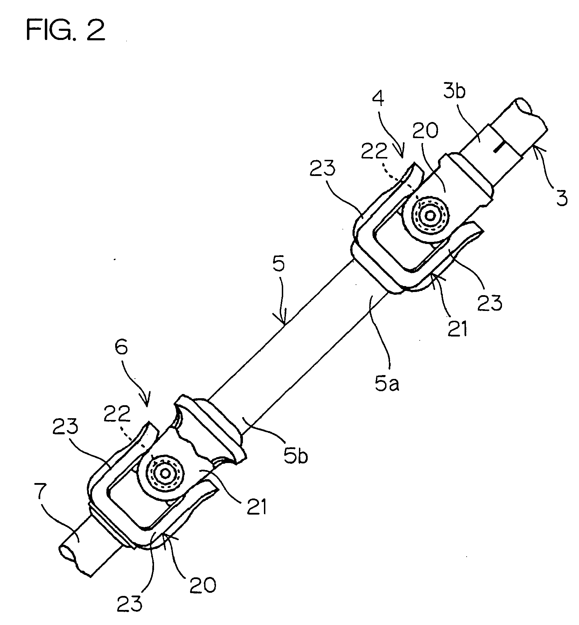

Referring to Fig. 2, the universal joint 4 comprises yokes 20 (one of them is illustrated) provided at the other end 3b of the steering shaft 3, a yoke 21 provided at the one end 5a of the intermediate shaft 5, and a cross spider 22 for connecting the yoke 20 and the yoke 21.

Similarly, the universal joint 6 comprises a yoke 20 provided at an end of the pinion shaft 7, yokes 21 (one of them is illustrated) provided at the other end 5b of the intermediate shaft 5, and a cross spider 22 for connecting the yoke 20 and the yoke 21.

Each of the yokes 20 and 21 has a U shape and has a pair of tubs 23. The paired tubs 23 are parallel to each other.

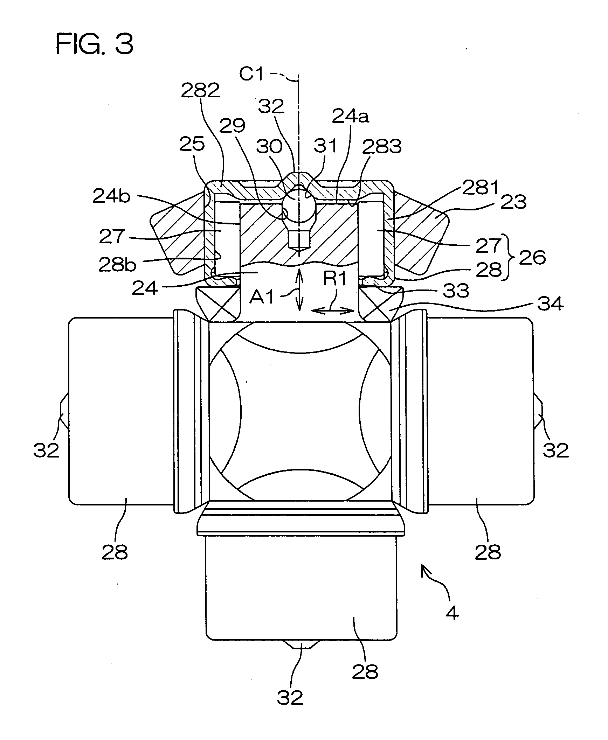

Since the universal joints 4 and 6 have entirely the same configuration, description is made in conformity with the universal joint 4. Referring to Fig. 3, each of the tubs 23 is formed with a fitting hole 25 for a corresponding trunnion 24 in the cross spider 22 (only one of the tubs 23 is illustrated for simplification in Fig. 3). The corresponding trunnion 24 in the cross spider 22 is supported so as to be rotatable through a bearing 26 fitted and held in the fitting hole 25.

The bearing 26 comprises a plurality of needle roller 27 arranged in an annular shape around the trunnion 24, and a cup-shaped outer ring 28 that holds the needle rollers 27. The outer ring 28 is fitted in and fixed to the fitting hole 25. The outer ring 28 comprises a main body 281 fitted in the fitting hole 25, and a closed end 282 provided at one end in the axial direction of the main body 281.

A ball 30 is held in a ball holding hole 29 formed on an end surface 24a of the trunnion 24. A ball receiving section 31 for elastically receiving the ball 30 is formed on an inner surface 283 at the closed end 282 of the outer ring 28.

The ball holding hole 29 comprises a circular hole arranged coaxially with the trunnion 24. The ball 30 is pressed into the ball holding hole 29 composed of the circular hole. That is, the ball 30 is held in the ball holding hole 29 with an interference. The movement of the ball 30 in the axial direction A1 and the radial direction R1 of the trunnion 24 is regulated. A part of the ball 30 projects toward the closed end 282 of the outer ring 28 from the ball holding hole 29. The part of the ball 30 is received by the ball receiving section 31.

A center hole provided when the circular hole serving as the ball holding hole 29 is processed is formed so as to connect with an innermost portion of the ball holding hole 29.

The ball receiving section 31 is composed of a conical tapered surface centered around a central axis C1 of the outer ring 28, and is brought into linear contact with the ball 30. A projection 32 swollen out so as to form the ball receiving section 31 on the inner surface 283 at the closed end 282 of the outer ring 28 is provided on an outer surface 284 at the closed end 282.

An inward annular flange 33 is extended at the other end of the main body 281 in the outer ring 28. An annular oil seal 34 is held between the annular flange 33 and the shoulder of the trunnion 24. An area between the outer ring 28 and the trunnion 24 is liquid-tightly sealed by the oil seal 34.

According to the present embodiment, when transmission torque is low, the torque is transmitted to the outer ring 28 from the trunnion 24 through the ball 30. On the other hand, when transmission torque is high, the torque is transmitted to the outer ring 28 from the trunnion 24 through the needle rollers 27.

Since the ball 30 held in the ball holding hole 29 in the trunnion 24 is elastically urged in the axial direction A1 and the radial direction R1 of the trunnion 24 by the ball receiving section 31 composed of a conical tapered surface, backlash in the axial direction A1 and the radial direction R1 by the trunnion 24 can be eliminated, and noise can be reduced.

Particularly, even in a case where a clearance in the radial direction R1 between an outer peripheral surface 24b of the trunnion 24 and an inner peripheral surface 28b of the main body 281 in the outer ring 28 is larger than the diameter of the needle roller 27, that is, a case where the difference between the inner diameter D1 of the outer ring 28 and the outer diameter D2 of the trunnion 24 is larger than two times the diameter D3 of the needle roller 27 (D1 - D2 > 2 D3), the trunnion 24 does not produce backlash in the radial direction R1. Since the ball receiving section 31 composed of the conical tapered surface is brought into linear contact with the ball 30, the rise in resistance torque can be restrained, as compared with that in a case where the ball receiving section is brought into surface contact with the ball.

Since the ball 30 is pressed into the ball holding hole 29 composed of the circular hole, the present invention has the following advantages. That is, when the universal joint 4 is assembled, the amount of pressing of the ball 30 into the ball holding hole 29 by the outer ring 28 is automatically adjusted even if there are variations in tolerance among components in the axial direction A1 of the trunnion 24, so that the above-mentioned variations can be absorbed. Consequently, a load applied to the outer ring 28 from the ball 30 is not excessive, thereby making it possible to eliminate backlash in the axial direction A1 between the trunnion 24 and the outer ring 28 while restraining resistance torque at the time of rotation.

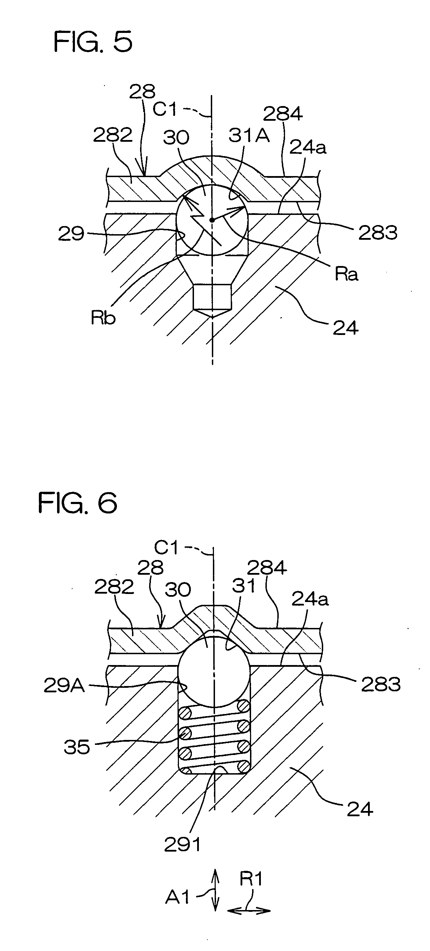

Although in the embodiment shown in Fig. 3, the ball receiving section 31 is composed of a conical tapered surface, the present invention is not limited to the same. For example, a ball receiving section 31A composed of a concavely-curved surface having a larger radius of curvature Rb than the radius Ra of the ball 30 may be used, as shown in Fig. 5. The concavely-curved surface is a part of a spherical surface, for example.

Although in the embodiment shown in Fig.3, the ball holding hole 29 into which the ball 30 is pressed is provided, a ball holding hole 29A for holding the ball 30 so as to be slidable in the axial direction A1 of the trunnion 24 may be provided, as shown in Fig. 6. In this case, the ball 30 may be elastically urged toward the ball receiving section 31 by a helical compression spring 35 serving as an urging member accommodated in the ball holding hole 29A. The helical compression spring 35 is interposed between a bottom 291 of the ball holding hole 29A and the ball 30.

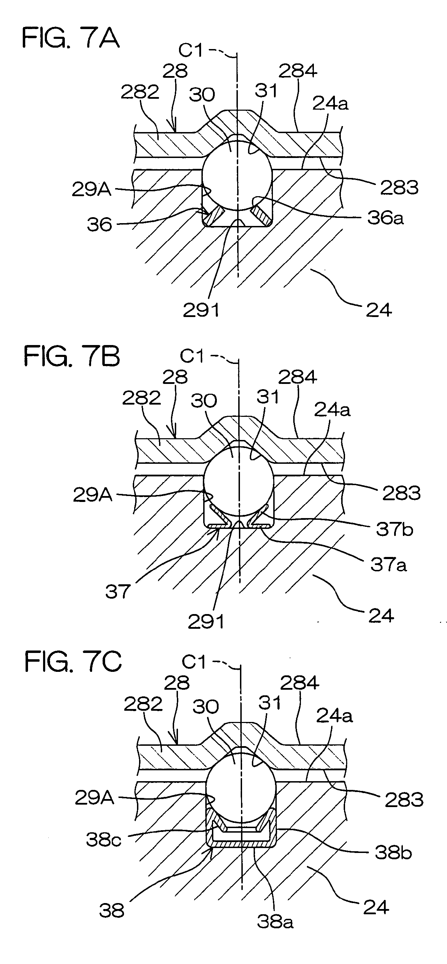

The helical compression spring 35 may be replaced with a belleville spring 36, as shown in Fig. 7A, as an elastic member. An inner peripheral edge 36a of the belleville spring 36 is brought into contact with the ball 30.

As shown in Fig. 7B, an urging member 37 may be used. The urging member 37 comprises a base 37a serving as a supporting section composed of an annular plate received by the bottom 291 of the ball holding hole 29A, and a belleville spring 37b extended so as to spread in a conical tapered shape from an inner peripheral edge of the base 37a. The belleville spring 37b has a conical tapered surface receiving the ball 30.

An urging member 38, as shown in Fig. 7C, may be used. The urging member 38 comprises a disc-shaped base 38a received by the bottom 291 of the ball holding hole 29A, a cylinder 38b extended in an orthogonal shape from an outer peripheral edge of the base 38a, and a belleville spring 38c whose diameter is reduced in a conical tapered shape toward the bottom 291 of the ball holding hole 29A from one edge of the cylinder 38b. The belleville spring 38c has a conical tapered surface receiving the ball 30. The base 38a and the cylinder 38b constitute a supporting section for supporting the belleville spring 38c.

In each of the respective embodiments shown in Figs. 6, 7A, 7B, and 7C, the same function and effect as those in the embodiment shown in Fig. 3 can be produced. That is, transmission torque is transmitted to the outer ring 28 from the trunnion 24 through the helical compression spring 35 or the leaf springs 36 to 38 and the ball 30 when the transmission torque is low, while being transmitted to the outer ring 28 from the trunnion 24 through the needle rollers 27 when the transmission torque is high.

Since the ball 30 held in the ball holding hole 29A in the trunnion 24 through the helical compression spring 35 or the belleville springs 36, 37b or 38c is elastically urged in the axial direction A1 and the radial direction R1 of the trunnion 24 by the ball receiving section 31 composed of a conical tapered surface or the like, backlash in the axial direction A1 and the radial direction R1 by the trunnion 24 can be eliminated.

Particularly, even in a case where the difference between the inner diameter D1 of the outer ring 28 and the outer diameter D2 of the trunnion 24 is larger than two times the diameter D3 of the needle roller 27 (D1 - D2 > 2 · D3), the trunnion 24 does not produce backlash in the radial direction R1.

Since the ball receiving section 31 is brought into linear contact with the ball 30, the rise in resistance torque can be restrained, as compared with that in a case where it is brought into surface contact with the ball 30. As a result, a universal joint 4 capable of reducing noise and having low resistance torque can be realized.

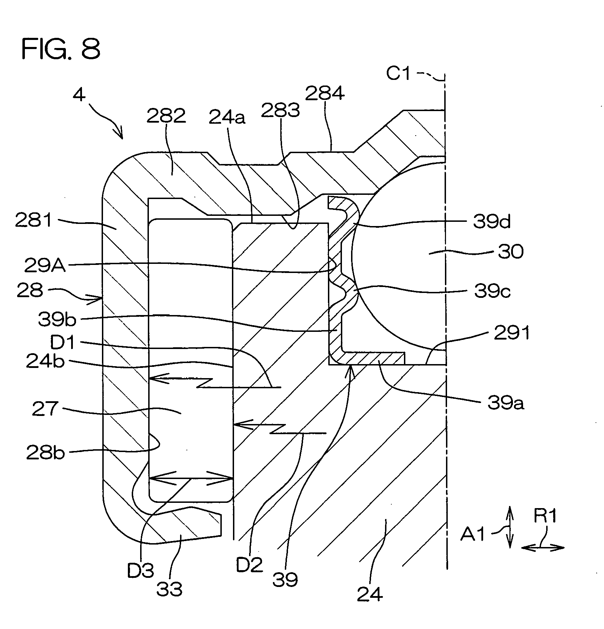

Fig. 8 illustrates another embodiment of the present invention. Referring to Fig. 8, the present embodiment is characterized in that an urging member 39 comprising a base 39a, a cylinder 39b, a projection for urging a ball (hereinafter referred to as a ball urging projection) 39c, and a projection for preventing a ball from slipping off (hereinafter referred to as a ball slip preventing projection) 39d is used.

The base 39a is composed of an annular plate received by the bottom 291 of a ball holding hole 29A. The cylinder 39b is extended in an orthogonal shape from an outer peripheral edge of the base 39a and is fitted in an inner peripheral surface of the ball holding hole 29A in a state where it surrounds a ball 30.

The ball urging projection 39c projects in a mountain shape inward from a halfway portion in the axial direction of the cylinder 39b, the ball 30 is elastically urged toward the ball receiving section 31 (in an axial direction A1 of a trunnion 24), and the ball 30 is elastically urged in a radial direction R1 of the trunnion 24.

The ball slip preventing projection 39d is formed so as to project in a mountain shape inward toward one end of the cylinder 39b, and is engaged with the ball 30 to prevent the ball 30 from slipping off the ball holding hole 29. The projections 39c and 39d may be formed on the whole periphery of the cylinder 39b. Alternatively, a plurality of projections may be formed with equal spacing in the circumferential direction.

In the present embodiment, a universal joint 4 capable of reducing noise and having low resistance torque can be also realized, as in each of the embodiments shown in Figs. 7A to 7C. At the time of assembling, the ball 30 can be held within the cylinder 39b between the ball urging projection 39c and the ball slip preventing projection 39d. That is, the ball 30 can be held in the ball holding hole 29A using the urging member 39, thereby making it possible to improve workability at the time of assembling.

The universal joint according to the present invention is not limited to a steering device. For example, it is suitably applied as a universal joint in another rotating member, such as a propeller shaft of the automobile.

Although the present invention has been described in detail by its specific embodiments, those skilled in the art who have understood the foregoing contents would easily consider its changes, modifications, and equivalents. Therefore, the present invention should be within the range of the claims and the range of its equivalents.

The present application corresponds to an application No. 2004-244883 filed with the Japanese Patent Office on August 25, 2004, the disclosure of which is hereinto incorporated by reference.

## Claims

1. A universal joint comprising a cross spider, comprising:
a trunnion provided in the cross spider;
a plurality of needle rollers arranged in an annular shape so as to surround an outer peripheral surface of the trunnion; and
an outer ring held in a fitting hole of a yoke and supporting the trunnion so as to be rotatable with the needle rollers sandwiched therebetween,
the outer ring comprising a cylindrical main body fitted in the fitting hole of the yoke and a closed end for closing one end of the main body,
the trunnion comprising an end surface having a ball holding hole formed thereon,
a ball being held in the ball holding hole,
a ball receiving section for elastically receiving the ball held in the ball holding hole being provided at the closed end of the outer ring,
the ball receiving section comprising either one of a conical tapered surface and a concavely-curved surface, and
a radius of curvature of the concavely-curved surface being larger than a radius of the ball.

2. The universal joint according to claim 1, wherein a difference between an inner diameter of the outer ring and an outer diameter of the trunnion is larger than two times a diameter of the needle roller.

3. The universal joint according to claim 1, wherein
a transmitted torque between the trunnion and the yoke is transmitted between the trunnion and the yoke through the ball when the transmitted torque is lower than a predetermined amount, and
the transmitted torque between the trunnion and the yoke is transmitted between the trunnion and the yoke through the needle rollers when the transmitted torque exceeds the predetermined amount.

4. The universal joint according to claim 1, wherein the closed end of the outer ring is elastically deformable.

5. The universal joint according to claim 1, wherein
the ball holding hole comprises a circular hole arranged coaxially with the trunnion, and
the ball is pressed into the circular hole.

6. The universal joint according to claim 5, wherein
the ball holding hole comprises a circular hole arranged coaxially with the trunnion, and
the ball is accommodated so as to be slidable in the circular hole.

7. The universal joint according to claim 6, further comprising an urging member accommodated in the circular hole and urging the ball to the ball receiving section.

8. The universal joint according to claim 7, wherein the urging member has a projection for preventing the ball from slipping off the circular hole.

9. The universal joint according to claim 7, wherein the urging member comprises an elastic member.

10. The universal joint according to claim 7, wherein the urging member comprises a helical compression spring.

11. The universal joint according to claim 7, wherein the urging member comprises a leaf spring.

12. The universal joint according to claim 7, wherein the urging member includes a belleville spring.

13. The universal joint according to claim 12, wherein the belleville spring includes a belleville spring having a conical tapered surface receiving the ball.

14. The universal joint according to claim 7, wherein the urging member comprises a supporting section held in the circular hole and a belleville spring extended from the supporting section.

15. The universal joint according to claim 14, wherein
the supporting section comprises a base composed of an annular plate received by a bottom of the circular hole, and
the belleville spring includes a belleville spring extended so as to spread in a conical tapered shape from an inner peripheral edge of the base.

16. The universal joint according to claim 14, wherein
the supporting section includes a supporting section having a cylinder fitted in the circular hole, and
the belleville spring includes a belleville spring whose diameter is reduced in a conical tapered shape from one end of the cylinder to the bottom of the circular hole.

17. The universal j oint according to claim 7, wherein
the urging member comprises a cylinder fitted in the circular hole and held in the circular hole and a ball urging projection provided in the cylinder and projecting inward in a radial direction of the cylinder, and
the ball urging projection elastically urges the ball in an axial direction and a radial direction of the trunnion.

18. The universal joint according to claim 17, further comprising a ball slip preventing projection provided at one end of the cylinder for preventing the ball from slipping off the circular hole.

19. The universal joint according to claim 18, wherein the ball is held in the cylinder between the ball urging projection and the ball slip preventing projection.
